# EUROPEAN PATENT SPECIFICATION

(11) **EP 3 353 924 B1**
(45) Date of publication and mention of the grant of the patent: **01.12.2021**
(21) Application number: 16716774.1
(22) Date of filing: 01.04.2016
(51) Int. Cl.: H04L 1/00, H04L 5/00

(54) **MAPPING OF PHYSICAL BROADCAST CHANNEL (PBCH) REPETITION SYMBOLS FOR MACHINE-TYPE COMMUNICATION (MTC)**
ZUORDNUNG VON WIEDERHOLUNGSSYMBOLEN PHYSIKALISCHER RUNDFUNKKANÄLE (PBCH) FÜR MASCHINENARTIGE KOMMUNIKATION (MTC)
MAPPAGE DE SYMBOLES DE RÉPÉTITION DE CANAL PHYSIQUE DE DIFFUSION (PBCH) POUR UNE COMMUNICATION DE TYPE MACHINE

(30) Priority: 24.09.2015 US 201562232389 P; 01.10.2015 US 201562235760 P
(43) Date of publication of application: 01.08.2018
(73) Proprietor: Apple Inc., Cupertino, CA 95014 (US)
(72) Inventor: HAN, Seunghee, San Jose, California 95120 (US); CHATTERJEE, Debdeep, San Jose, CA 95128 (US); XIONG, Gang, Beaverton, Oregon 97006 (US)
(74) Representative: Lang, Johannes
(86) International application number: PCT/US2016/025616
(87) International publication number: WO 2017/052689

(56) References cited:
- US-A1- 2015 085 795
- QUALCOMM INCORPORATED: "PBCH Repetition for MTC", 3GPP DRAFT; R1-153851 PBCH REPETITION FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001288, Retrieved from the Internet: URL:http://www.3gpp.org/ftp/Meetings_3GPP_ SYNC/RAN1/Docs/ [retrieved on 2015-08-23]

## Description

### FIELD

The present disclosure generally relates to the field of electronic communication. More particularly, some embodiments generally relate to mapping of PBCH (Physical Broadcast Channel) repetition symbols for MTC (Machine-Type Communication).

### BACKGROUND

Machine-Type Communication (MTC) is a promising and emerging technology to enable a ubiquitous computing environment towards the concept of "Internet of Things (IoT)." To achieve this, potential MTC based applications and services are to be seamlessly integrated into mobile broadband networks.

However, existing mobile broadband networks were generally designed to optimize performance mainly for human type of communications and thus are not designed or optimized to meet the MTC related goals.

US 2015/085795 relates to methods and apparatus for a base station to transmit repetitions of broadcast information and for a UE to detect the broadcast information.

QUALCOMM INCORPORATED: "PBCH Repetition for MTC", 3GPP Draft; Rl-153851 PBCH REPETITION FOR MTC, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Beijing, China; 20150824-20150828 23 August 2015, XP051001288, retrieved from the Internet URL: http://www.3gpp.org/ftp/Meetings_3GPP_SYNC/RAN1/Docs/ on 2015-08-23 relates to PBCH repetition for MTC.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1 shows an exemplary block diagram of the overall architecture of a 3GPP LTE network that includes one or more devices that are capable of implementing techniques for mapping of PBCH repetition symbols for MTC, according to the subject matter disclosed herein.
FIGS. 2 and 3 present one option of mapping of PBCH repetition symbols within a subframe. FIGS. 4, 5, and 6 illustrate PBCH repetition symbol mapping options, according to some embodiments.
FIG. 7 is a schematic, block diagram illustration of an information-handling system in accordance with one or more exemplary embodiments disclosed herein.
FIG. 8 is an isometric view of an exemplary embodiment of the information-handling system of FIG. 7 that optionally may include a touch screen in accordance with one or more embodiments disclosed herein.
FIG. 9 is a schematic, block diagram illustration of components of a wireless device in accordance with one or more exemplary embodiments disclosed herein.

It will be appreciated that for simplicity and/or clarity of illustration, elements illustrated in the figures have not necessarily been drawn to scale. For example, the dimensions of some of the elements may be exaggerated relative to other elements for clarity. Further, if considered appropriate, reference numerals have been repeated among the figures to indicate corresponding and/or analogous elements.

### DETAILED DESCRIPTION

The invention is defined in the appended claims. In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware, software, firmware, or some combination thereof.

As mentioned above in the background section, Machine-Type Communication (MTC) is a promising and emerging technology to enable a ubiquitous computing environment towards the concept of "Internet of Things (IoT)." Potential MTC based applications include smart metering, healthcare monitoring, remote security surveillance, intelligent transportation system, etc. These services and applications stimulate the design and development of a new type of MTC device that are to be seamlessly integrated into current and next generation mobile broadband networks such as LTE (Long Term Evolution) and LTE-Advanced. However, the existing mobile broadband networks were generally designed to optimize performance mainly for human type of communications and thus are not designed or optimized to meet the MTC related goals.

One or more embodiments relate to mapping of PBCH repetition symbols for MTC. More particularly, some embodiments provide option(s) for mapping of PBCH repetition symbols considering the presence of the legacy PBCH symbol locations that can facilitate improved frequency tracking loop operation and, at the same time, provide a relatively simple mapping rule to minimize UE (User Equipment) complexity and/or provide improved channel estimation with an effective increase in the CRS (Cell-specific Reference Symbols (or Common RS)) density, e.g., by introducing additional "virtual CRS" locations.

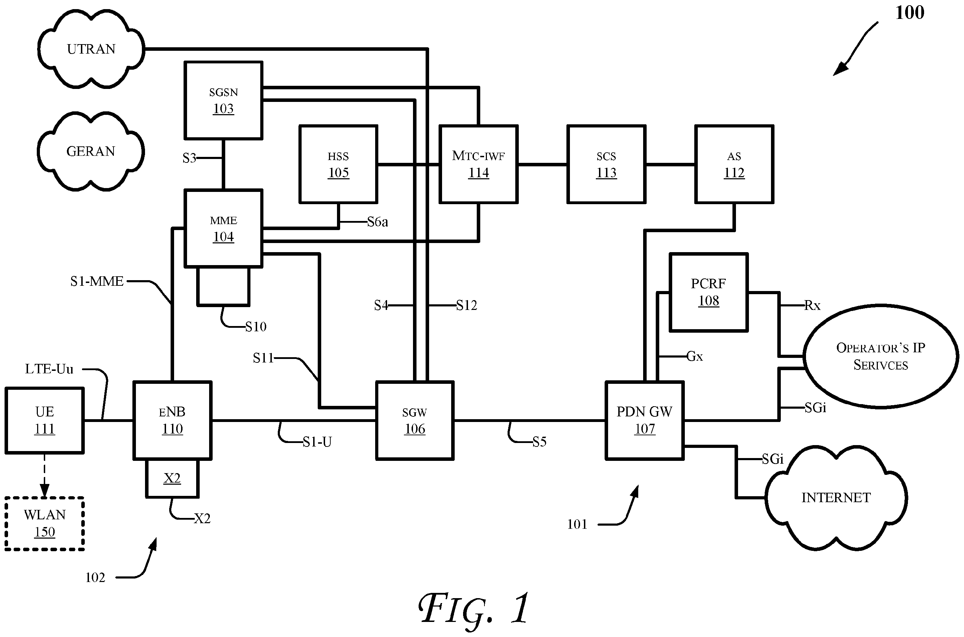

FIG. 1 shows an exemplary block diagram of the overall architecture of a 3GPP LTE network 100 that includes one or more devices that are capable of implementing techniques for mapping of PBCH repetition symbols for MTC, according to the subject matter disclosed herein. Fig. 1 also generally shows exemplary network elements and exemplary standardized interfaces. At a high level, network 100 comprises a Core Network (CN) 101 (also referred to as an Evolved Packet System (EPC)), and an air-interface access network E-UTRAN (Evolved Universal Terrestrial Radio Access Network) 102. CN 101 is responsible for the overall control of the various User Equipment (UE) coupled to the network and establishment of the bearers. CN 101 may include functional entities, such as a home agent and/or an ANDSF (Access Network Discovery and Selection Function) server or entity, although not explicitly depicted. E-UTRAN 102 is responsible for all radio-related functions.

Exemplary logical nodes of CN 101 include, but are not limited to, a Serving GPRS Support Node (SGSN) 103, Mobility Management Entity (MME) 104, a Home Subscriber Server (HSS) 105, a Serving Gateway (SGW) 106, a PDN Gateway (or PDN GW) 107, and a Policy and Charging Rules Function (PCRF) Manager logic 108. The functionality of each of the network elements of CN 101 is generally in accordance with various standards and is not described herein for simplicity. Each of the network elements of CN 101 are interconnected by exemplary standardized interfaces, some of which are indicated in Fig. 1, such as interfaces S3, S4, S5, etc.

While CN 101 includes many logical nodes, the E-UTRAN access network 102 is formed by at least one node, such as evolved NodeB (Base Station (BS), eNB (or eNodeB which refers to evolved Node B) 110, which couples to one or more UE 111, of which only one is depicted in Fig 1 for the sake of simplicity. UE 111 is also referred to herein as a Wireless Device (WD) and/or a Subscriber Station (SS), and may include an M2M (Machine to Machine) type device. In one example, UE 111 may be coupled to eNB by an LTE-Uu interface. In one exemplary configuration, a single cell of an E-UTRAN access network 102 provides one substantially localized geographical transmission point (e.g., having multiple antenna devices) that provides access to one or more UEs. In another exemplary configuration, a single cell of an E-UTRAN access network 102 provides multiple geographically substantially isolated transmission points (each having one or more antenna devices) with each transmission point providing access to one or more UEs simultaneously and with the signaling bits defined for the one cell so that all UEs share the same spatial signaling dimensioning.

For normal user traffic (as opposed to broadcast), there is no centralized controller in E-UTRAN; hence the E-UTRAN architecture is said to be flat. The eNBs can be interconnected with each other by an interface known as "X2" and to the EPC by an S1 interface. More specifically, an eNB is coupled to MME 104 by an S1 MME interface and to SGW 106 by an S1 U interface. The protocols that run between the eNBs and the UEs are generally referred to as the "AS protocols." Details of the various interfaces can be in accordance with available standards and are not described herein for the sake of simplicity.

The eNB 110 hosts the PHYsical (PHY), Medium Access Control (MAC), Radio Link Control (RLC), and Packet Data Control Protocol (PDCP) layers, which are not shown in Fig. 1, and which include the functionality of user-plane header-compression and encryption. The eNB 110 also provides Radio Resource Control (RRC) functionality corresponding to the control plane, and performs many functions including radio resource management, admission control, scheduling, enforcement of negotiated Up Link (UL) QoS (Quality of Service), cell information broadcast, ciphering/deciphering of user and control plane data, and compression/decompression of DL/UL (Downlink/Uplink) user plane packet headers.

The RRC layer in eNB 110 covers all functions related to the radio bearers, such as radio bearer control, radio admission control, radio mobility control, scheduling and dynamic allocation of resources to UEs in both uplink and downlink, header compression for efficient use of the radio interface, security of all data sent over the radio interface, and connectivity to the EPC. The RRC layer makes handover decisions based on neighbor cell measurements sent by UE 111, generates pages for UEs 111 over the air, broadcasts system information, controls UE measurement reporting, such as the periodicity of Channel Quality Information (CQI) reports, and allocates cell-level temporary identifiers to active UEs 111. The RRC layer also executes transfer of UE context from a source eNB to a target eNB during handover, and provides integrity protection for RRC messages. Additionally, the RRC layer is responsible for the setting up and maintenance of radio bearers. Various types of WLAN may be supported such as any of those discussed herein.

As mentioned above, the existing mobile broadband networks were generally designed to optimize performance mainly for human type of communications and thus are not designed or optimized to meet the MTC related goals. To this end, MTC specific design are being studied by 3GPP Radio Access Network (RAN) working groups (WGs) for specification support in Release-12 LTE specifications, where one primary objective is to focus on the lower device cost, enhanced coverage, and reduced power consumption.

To further reduce the cost and power consumption, it may be helpful to further reduce the transmission bandwidth for MTC system to 1.4MHz, which is the minimum bandwidth of existing LTE system. In this case, the transmission bandwidth for both control and data channels can be reduced to 1.4MHz. In general, it can be envisioned that a large number of MTC devices will be deployed for specific services within one cell in the future. When such a massive number of MTC devices attempt to access and communicate with the network, multiple MTC regions with 1.4MHz bandwidth can be allocated by eNB.

To this end, the embodiments provide several options for mapping of PBCH repetition symbols considering the presence of the legacy PBCH symbol locations that can facilitate improved frequency tracking loop operation and, at the same time, provide a relatively simple mapping rule to minimize UE complexity and/or provide improved channel estimation with an effective increase in the CRS density, e.g., by introducing additional "virtual CRS" locations. Also, those with ordinary skill in the art would appreciate that while some solutions discussed herein are described using terminology and concepts related to the Rel-13 Work Item on Further Physical Layer Enhancements for MTC for Low Complexity (LC) MTC UEs or MTC UEs in Enhanced Coverage (EC), the techniques disclosed herein may also be applicable to other Cellular IoT systems such as Narrowband-LTE (NB-LTE) or Narrowband-Internet of Things (NB-IoT).

In order to provide enhanced coverage support for MTC User Equipments (UEs) and support efficient acquisition of the Master Information Block (MIB) carried by the Physical Broadcast Channel (PBCH), some embodiments support repeated transmissions of PBCH for all LTE system bandwidths except for when the LTE system bandwidth (BW) is 1.4 MHz. Further, it has been agreed to support PBCH repetition in subframe (SF) #9 for FDD (Frequency Division Duplex) and SF #5 for TDD (Time Division Duplex) in addition to the legacy PBCH location of SF #0 in every radio frame. Additionally, the transmitted PBCH may be repeated on the other available symbols in the PBCH subframes, except for legacy DL (Downlink) control region, CRS REs (Resource Elements), and PSS/SSS (Primary Synchronization Signal/Secondary Synchronization Signal) symbols (for SF #0 for FDD).

To avoid collisions with CSI-RS (Channel State Information-Reference Symbols) transmissions, in some embodiments, the PBCH transmissions on the affected REs would be punctured by the transmitted CSI-RS (or Channel State Information Reference Symbols). As discussed herein, "puncturing" operation implies that CSI-RS REs are transmitted on the REs on which PBCH repetitions and CSI-RS may collide, and QPSK symbols for PBCH are not transmitted on those REs in favor of CSI-RS transmissions. Specifically, if PBCH symbols are to be mapped in a sequence {1, 2, 3, 4, ...} and the 2^{nd} element is punctured by CSI-RS transmission, then the resulting transmitted sequence would be {1, CSI-RS, 3, 4, ...}. Also, a working assumption may be to consider mapping PBCH repetition symbols for improving frequency tracking loop operation.

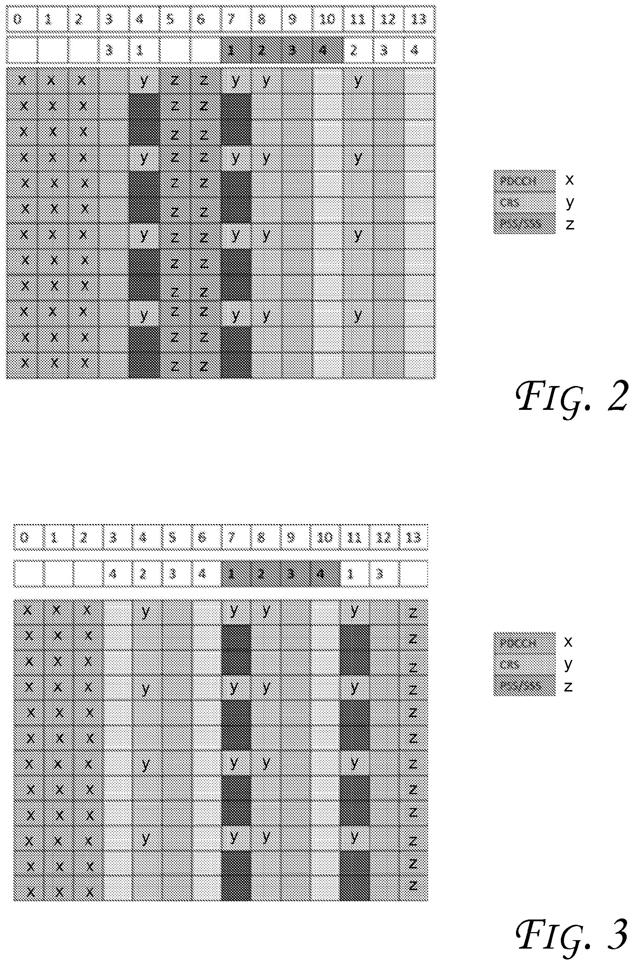

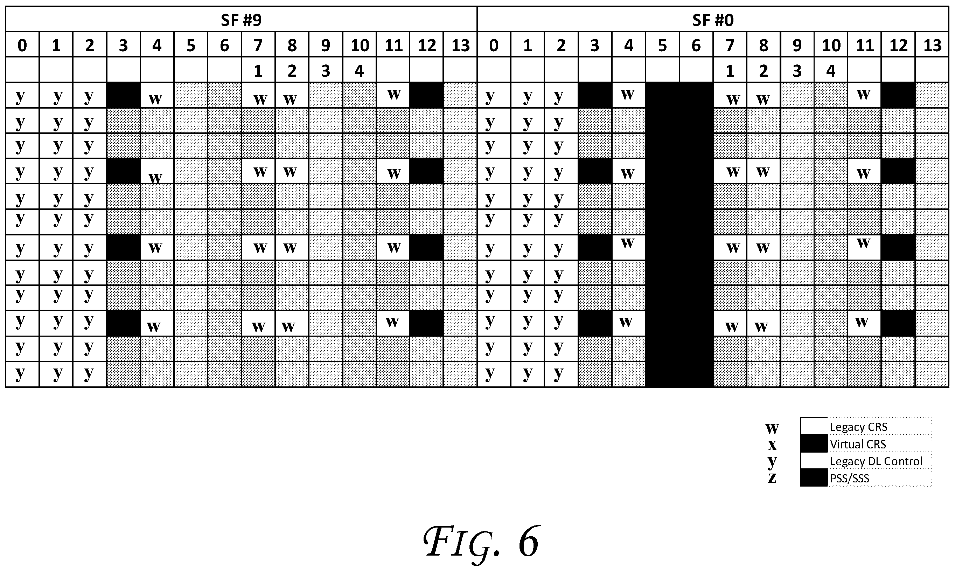

FIGS. 2 and 3 present one option of mapping of PBCH repetition symbols within a subframe FDD and TDD cases, respectively. As shown in FIGS. 2-3, PDCCH (Physical Downlink Control Channel) is labeled with "x", CRC is labeled as "y" and PSS/SSS is labeled with "z". Also, the top rows in FIGS. 2-5 (and second row in FIG. 6) show ordered OFDM symbol locations per subframe, while the second row in FIGS. 2-5 (and third row in FIG. 6) indicate the OFDM symbol number for PBCH assuming indexing of the LTE PBCH symbols from 1 to 4 for the four OFDM symbols for PBCH as specified in LTE when PBCH is not transmitted without any repetitions. In the example of FIGS. 2-3, PBCH in symbols #4 and #7, symbols #3, #9, and #12, etc. can be used by the UE receiver to estimate the frequency offset by estimating the phase difference between the symbols.

In some embodiments, for PBCH subframes (i.e., subframes carrying PBCH repetitions), the extent of the legacy DL control region is assumed to equal three symbols. Hence, a maximum of 11 OFDM (Orthogonal Frequency Division Multiplexing) symbols can be available within a subframe for mapping of PBCH symbols.

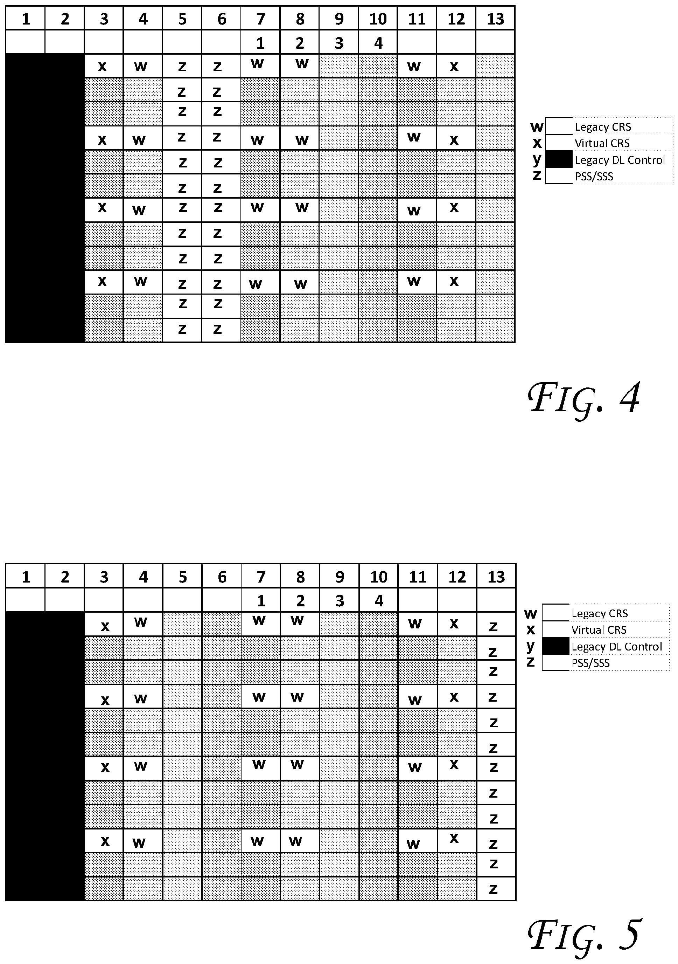

FIG. 4 illustrates PBCH repetition symbol mapping option for FDD (SF #0), according to an embodiment. FIG. 5 illustrates PBCH repetition symbol mapping option for TDD (SF #0), in accordance with one embodiment. Below, new mapping concepts are described assuming the FDD case while the same ideas can be applied with straightforward adaptation for the TDD case.

Moreover, from FIGS. 2 and 3, it can be observed that the principle used for the PBCH repetition symbol mapping may be based on matching the OFDM symbols with CRS and those without CRS REs, respectively. However, as a consequence, the rate matching operation for the PBCH repetitions within a subframe, except for the legacy PBCH location of symbols #7 through #10, could be done over symbols that are non-contiguous in time and with a discontinuous (in time) ordering of the PBCH symbols, and are different compared to legacy PBCH mapping. This can increase UE complexity especially considering the frequency-first mapping of PBCH symbols to physical resources.

Compared to this option, in one embodiment, the PBCH repetition symbols are mapped using the same relative symbol location as for the four legacy PBCH symbols (i.e., symbols #7 through #10). Further, to handle the potential mismatch in the OFDM symbols with and without CRS REs between the symbols for legacy PBCH and the repeated PBCH (e.g., for symbols originally without CRS Res), "virtual CRS" REs can be introduced at the same positions as in the corresponding legacy PBCH symbols in some embodiments. The virtual CRS REs may carry CRS symbols that are exact replicas of those corresponding to the original PBCH symbol. Alternatively, the CRS sequence for the virtual CRS could use the CRS sequence that is defined as a function of the new symbol location.

To handle the case (where a repeated PBCH symbol corresponds to the PSS/SSS or OFDM symbols that originally carry CRS Res), the corresponding PBCH transmission on the affected REs or OFDM symbols (the latter for the case of PSS/SSS) can be assumed to be punctured by the legacy CRS or legacy PSS/SSS transmissions in one or more embodiments. The resulting mapping examples are shown in FIGS. 4 and 5. Thus, for this mapping scheme, the channel estimation performance for PBCH decoding can be improved, as the UE can use the virtual CRS in addition to the legacy CRS REs. This may provide significant benefits in improving the channel estimation considering operation in low SNR (Signal-to-Noise Ratio) regime.

In yet another embodiment, to facilitate easier and less complex implementation of frequency offset estimation using CRS REs on subsequent symbols, the CRS sequence mapped for virtual CRS symbols transmitted in OFDM symbol # 3 and/or symbol #12 can be exact replicas of those used for CRS transmission in symbol #4 and/or symbol #11, respectively.

For the CRS Antenna Port (AP) to RE mapping (e.g., for both FDD and TDD cases), in one embodiment, the AP mapping for the virtual CRS REs can be same as their original counterparts. Thus, for instance, for OFDM symbol #3, the APs 0 and 1 can be mapped on the virtual CRS REs the same way it is mapped for the CRS REs in OFDM symbol #7, for OFDM symbol #12, the APs 2 and 3 can be mapped on the virtual CRS REs the same way it is mapped for the CRS REs in OFDM symbol #8.

In another embodiment, the AP to RE mapping of the virtual CRS is performed to balance the CRS density corresponding to each AP 0 through 4. Accordingly, in one example, the AP mapping for OFDM symbol #3 can be changed from APs 0 and 1 mapping to APs 2 and 3. Thus, the only change from the previous example would be that for symbol #3 in the subframe, the virtual CRS REs map to APs 2 and 3 similar to the AP to RE mapping for OFDM symbol #8 in legacy 4-port CRS pattern. This can enable an equal density of the CRS REs for the four APs which can benefit the channel estimation further since the UE blindly detects the APs used for demodulation of PBCH (where per current LTE specifications, the actual AP configuration may be indicated via masking of the CRC of the PBCH itself).

Furthermore, for the FDD case, the 4th symbol of legacy PBCH (i.e., OFDM symbol #10) may not be repeated in the subframe. However, for FDD case, the PBCH is repeated in SFs #9 and #0. Hence, in terms of the symbols carrying the corresponding bits in 4th symbol of legacy PBCH can still be repeated in SF #9. This is shown in FIG. 6, which illustrates a PBCH repetition symbol mapping option for FDD (SFs #9 and SF#0), in accordance with some embodiments. In another alternative, the PBCH repetitions may be rate matched across both the consecutive subframes but at the same time the above-described principles of PBCH repetition symbol mapping can also be used. Moreover, the bits corresponding to the 4th symbol of legacy PBCH mostly include the parity bits - and hence, the impact from the absence of repetition of the 4th symbol may be not significant.

Accordingly, in one embodiment, both data and CRS REs from original PBCH symbols are repeated in symbols without CRS in a PBCH subframe. Alternatively, in repeated symbols without CRS, the REs corresponding to CRS symbols in original PBCH may be left empty. Further, the same relative order of repeated PBCH symbols as for legacy PBCH is maintained in an embodiment. For example, for FDD, continuous mapping of PBCH symbols across subframes #9 and #0, while, for TDD, the same PBCH repetition mapping in subframes #0 and #5 is maintained.

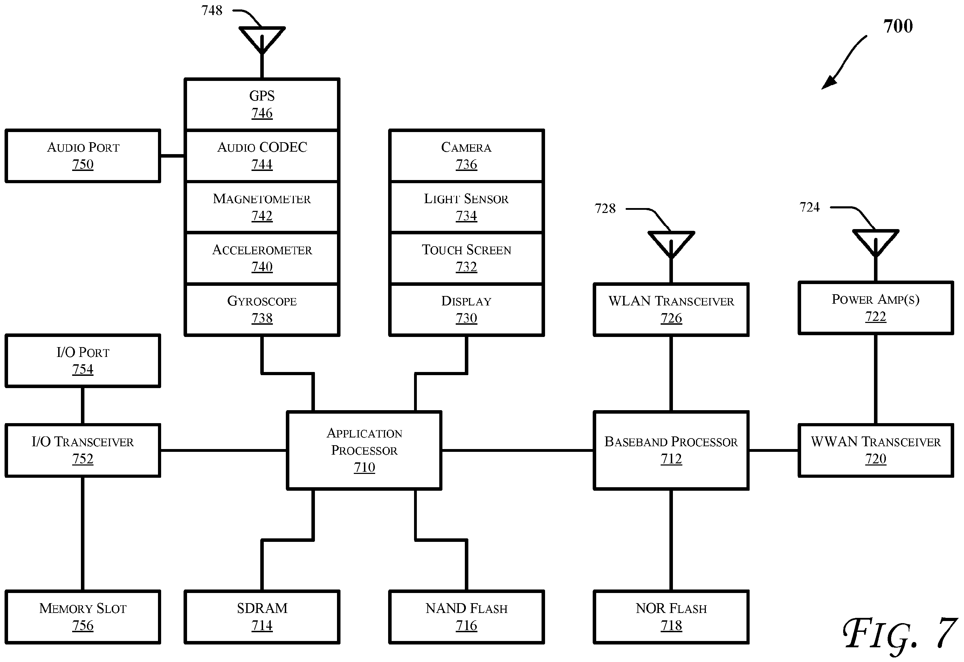

Referring now to FIG. 7, a block diagram of an information handling system capable of user equipment controlled mobility in an evolved radio access network in accordance with one or more embodiments will be discussed. Information handling system 700 of FIG. 7 may tangibly embody any one or more of the network elements described herein, above, including for example the elements of network 100 with greater or fewer components depending on the hardware specifications of the particular device. In one embodiment, information handling system 700 may tangibly embody a user equipment (UE) comprising circuitry to enter into an evolved universal mobile telecommunications system (UMTS) terrestrial radio access (E-UTRAN) Routing Area Paging Channel (ERA PCH) state, wherein the UE is configured with an E-UTRAN Routing Area (ERA) comprising a collection of cell identifiers, and an Anchor identifier (Anchor ID) to identify an anchor evolved Node B (eNB) for the UE, select to a new cell without performing a handover procedure, and perform a cell update procedure in response to the UE selecting to the new cell, although the scope of the claimed subject matter is not limited in this respect. In another embodiment, information handling system 700 may tangibly embody a user equipment (UE) comprising circuitry to enter into a Cell Update Connected (CU_CNCTD) state, wherein the UE is configured with an Anchor identifier (Anchor ID) to identify an anchor evolved Node B (eNB) for the UE, select to a new cell, perform a cell update procedure in response to the UE selecting to the new cell, perform a buffer request procedure in response to the UE selecting to the new cell, and perform a cell update procedure to download buffered data and to perform data transmission with the new cell, although the scope of the claimed subject matter is not limited in this respect. Although information handling system 700 represents one example of several types of computing platforms, information handling system 700 may include more or fewer elements and/or different arrangements of elements than shown in FIG. 7, and the scope of the claimed subject matter is not limited in these respects.

In one or more embodiments, information handling system 700 may include an application processor 710 and a baseband processor 712. Application processor 710 may be utilized as a general-purpose processor to run applications and the various subsystems for information handling system 700. Application processor 710 may include a single core or alternatively may include multiple processing cores. One or more of the cores may comprise a digital signal processor or digital signal processing (DSP) core. Furthermore, application processor 710 may include a graphics processor or coprocessor disposed on the same chip, or alternatively a graphics processor coupled to application processor 710 may comprise a separate, discrete graphics chip. Application processor 710 may include on board memory such as cache memory, and further may be coupled to external memory devices such as synchronous dynamic random access memory (SDRAM) 714 for storing and/or executing applications during operation, and NAND flash 716 for storing applications and/or data even when information handling system 700 is powered off. In one or more embodiments, instructions to operate or configure the information handling system 700 and/or any of its components or subsystems to operate in a manner as described herein may be stored on an article of manufacture comprising a (e.g., non-transitory) storage medium. In one or more embodiments, the storage medium may comprise any of the memory devices shown in and described herein, although the scope of the claimed subject matter is not limited in this respect. Baseband processor 712 may control the broadband radio functions for information handling system 700. Baseband processor 712 may store code for controlling such broadband radio functions in a NOR flash 718. Baseband processor 712 controls a wireless wide area network (WWAN) transceiver 720 which is used for modulating and/or demodulating broadband network signals, for example for communicating via a 3GPP LTE or LTE-Advanced network or the like.

In general, WWAN transceiver 720 may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 12), 3GPP Rel. 14 (3rd Generation Partnership Project Release 12), 3GPP LTE Extra, LTE Licensed-Assisted Access (LAA), UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth^{®}, Wireless Gigabit Alliance (WiGig) standard, millimeter wave (mmWave) standards in general for wireless systems operating at 10-90 GHz and above such as WiGig, IEEE 802.11 ad, IEEE 802.11 ay, and so on, and/or general telemetry transceivers, and in general any type of RF circuit or RFI sensitive circuit. It should be noted that such standards may evolve over time, and/or new standards may be promulgated, and the scope of the claimed subject matter is not limited in this respect.

The WWAN transceiver 720 couples to one or more power amps 742 respectively coupled to one or more antennas 724 for sending and receiving radio-frequency signals via the WWAN broadband network. The baseband processor 712 also may control a wireless local area network (WLAN) transceiver 726 coupled to one or more suitable antennas 728 and which may be capable of communicating via a Wi-Fi, Bluetooth^{®}, and/or an amplitude modulation (AM) or frequency modulation (FM) radio standard including an IEEE 802.11 a/b/g/n standard or the like. It should be noted that these are merely example implementations for application processor 710 and baseband processor 712, and the scope of the claimed subject matter is not limited in these respects. For example, any one or more of SDRAM 714, NAND flash 716 and/or NOR flash 718 may comprise other types of memory technology such as magnetic memory, chalcogenide memory, phase change memory, or ovonic memory, and the scope of the claimed subject matter is not limited in this respect.

In one or more embodiments, application processor 710 may drive a display 630 for displaying various information or data, and may further receive touch input from a user via a touch screen 732 for example via a finger or a stylus. An ambient light sensor 734 may be utilized to detect an amount of ambient light in which information handling system 700 is operating, for example to control a brightness or contrast value for display 730 as a function of the intensity of ambient light detected by ambient light sensor 734. One or more cameras 736 may be utilized to capture images that are processed by application processor 710 and/or at least temporarily stored in NAND flash 716. Furthermore, application processor may couple to a gyroscope 738, accelerometer 740, magnetometer 742, audio coder/decoder (CODEC) 744, and/or global positioning system (GPS) controller 746 coupled to an appropriate GPS antenna 748, for detection of various environmental properties including location, movement, and/or orientation of information handling system 700. Alternatively, controller 746 may comprise a Global Navigation Satellite System (GNSS) controller. Audio CODEC 744 may be coupled to one or more audio ports 750 to provide microphone input and speaker outputs either via internal devices and/or via external devices coupled to information handling system via the audio ports 750, for example via a headphone and microphone jack. In addition, application processor 710 may couple to one or more input/output (I/O) transceivers 752 to couple to one or more I/O ports 754 such as a universal serial bus (USB) port, a high-definition multimedia interface (HDMI) port, a serial port, and so on. Furthermore, one or more of the I/O transceivers 752 may couple to one or more memory slots 756 for optional removable memory such as secure digital (SD) card or a subscriber identity module (SIM) card, although the scope of the claimed subject matter is not limited in these respects.

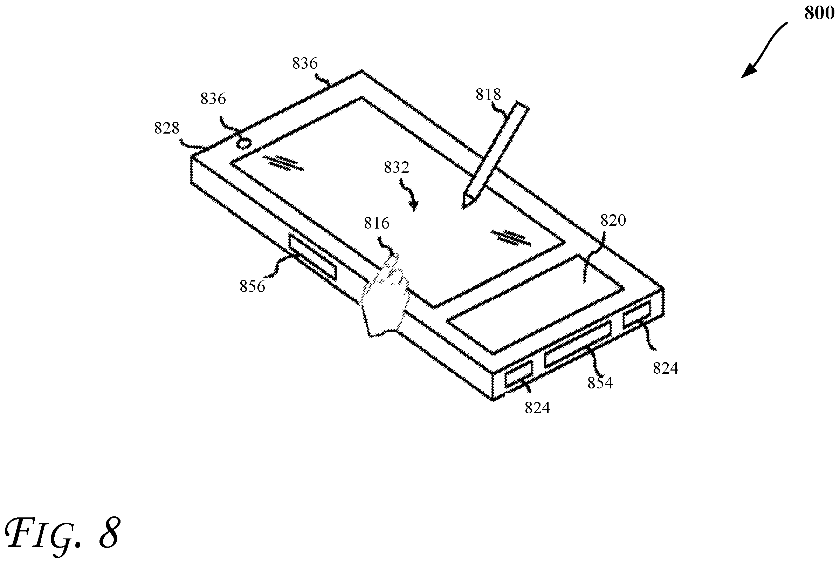

Referring now to FIG. 8, an isometric view of an information handling system of FIG. 7 that optionally may include a touch screen in accordance with one or more embodiments will be discussed. FIG. 8 shows an example implementation of information handling system 700 of FIG. 7 tangibly embodied as a cellular telephone, smartphone, or tablet type device or the like. The information handling system 700 may comprise a housing 810 having a display 730 which may include a touch screen 732 for receiving tactile input control and commands via a finger 816 of a user and/or a via stylus 818 to control one or more application processors 710. The housing 810 may house one or more components of information handling system 700, for example one or more application processors 710, one or more of SDRAM 714, NAND flash 716, NOR flash 718, baseband processor 712, and/or WWAN transceiver 720. The information handling system 700 further may optionally include a physical actuator area 820 which may comprise a keyboard or buttons for controlling information handling system via one or more buttons or switches. The information handling system 700 may also include a memory port or slot 756 for receiving nonvolatile memory such as flash memory, for example in the form of a secure digital (SD) card or a subscriber identity module (SIM) card. Optionally, the information handling system 700 may further include one or more speakers and/or microphones 824 and a connection port 754 for connecting the information handling system 700 to another electronic device, dock, display, battery charger, and so on. In addition, information handling system 700 may include a headphone or speaker jack 828 and one or more cameras 736 on one or more sides of the housing 810. It should be noted that the information handling system 700 of FIG. 8 may include more or fewer elements than shown, in various arrangements, and the scope of the claimed subject matter is not limited in this respect.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

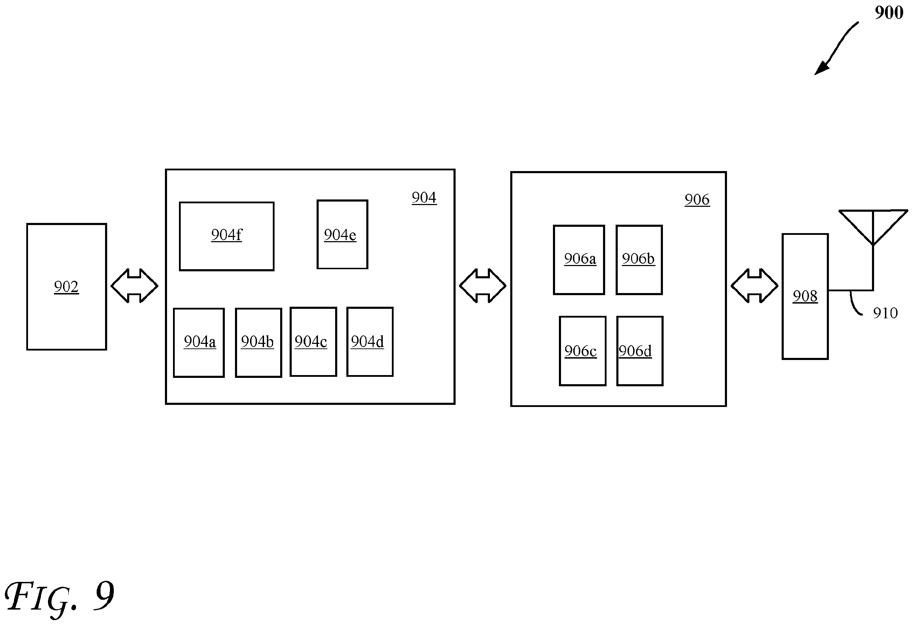

Referring now to FIG. 9, example components of a wireless device such as User Equipment (UE) device 110 in accordance with one or more embodiments will be discussed. In accordance with one embodiment, an eNB can include one or more of the components illustrated in and/or discussed with reference to Fig. 9. User equipment (UE) may correspond, for example, to UE 110 of network 100, although the scope of the claimed subject matter is not limited in this respect. In some embodiments, UE device 900 may include application circuitry 902, baseband circuitry 904, Radio Frequency (RF) circuitry 906, front-end module (FEM) circuitry 908 and one or more antennas 910, coupled together at least as shown.

Application circuitry 902 may include one or more application processors. For example, application circuitry 902 may include circuitry such as, but not limited to, one or more single-core or multi-core processors. The one or more processors may include any combination of general-purpose processors and dedicated processors, for example graphics processors, application processors, and so on. The processors may be coupled with and/or may include memory and/or storage and may be configured to execute instructions stored in the memory and/or storage to enable various applications and/or operating systems to run on the system.

Baseband circuitry 904 may include circuitry such as, but not limited to, one or more single-core or multi-core processors. Baseband circuitry 904 may include one or more baseband processors and/or control logic to process baseband signals received from a receive signal path of RF circuitry 906 and to generate baseband signals for a transmit signal path of the RF circuitry 906. Baseband processing circuity 904 may interface with the application circuitry 902 for generation and processing of the baseband signals and for controlling operations of the RF circuitry 906. For example, in some embodiments, the baseband circuitry 704 may include a second generation (2G) baseband processor 904a, third generation (3G) baseband processor 904b, fourth generation (4G) baseband processor 904c, and/or one or more other baseband processors 904d for other existing generations, generations in development or to be developed in the future, for example fifth generation (5G), sixth generation (6G), and so on. Baseband circuitry 904, for example one or more of baseband processors 904a through 904d, may handle various radio control functions that enable communication with one or more radio networks via RF circuitry 906. The radio control functions may include, but are not limited to, signal modulation and/or demodulation, encoding and/or decoding, radio frequency shifting, and so on. In some embodiments, modulation and/or demodulation circuitry of baseband circuitry 904 may include Fast-Fourier Transform (FFT), precoding, and/or constellation mapping and/or demapping functionality. In some embodiments, encoding and/or decoding circuitry of baseband circuitry 704 may include convolution, tail-biting convolution, turbo, Viterbi, and/or Low Density Parity Check (LDPC) encoder and/or decoder functionality. Embodiments of modulation and/or demodulation and encoder and/or decoder functionality are not limited to these examples and may include other suitable functionality in other embodiments.

In some embodiments, baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. Processor 904e of the baseband circuitry 904 may be configured to run elements of the protocol stack for signaling of the PHY, MAC, RLC, PDCP and/or RRC layers. In some embodiments, the baseband circuitry may include one or more audio digital signal processors (DSP) 904f. The one or more audio DSPs 904f may include elements for compression and/or decompression and/or echo cancellation and may include other suitable processing elements in other embodiments. Components of the baseband circuitry may be suitably combined in a single chip, a single chipset, or disposed on a same circuit board in some embodiments. In some embodiments, some or all of the constituent components of baseband circuitry 904 and application circuitry 902 may be implemented together such as, for example, on a system on a chip (SOC).

In some embodiments, baseband circuitry 904 may provide for communication compatible with one or more radio technologies. For example, in some embodiments, baseband circuitry 904 may support communication with an evolved universal terrestrial radio access network (EUTRAN) and/or other wireless metropolitan area networks (WMAN), a wireless local area network (WLAN), a wireless personal area network (WPAN). Embodiments in which baseband circuitry 704 is configured to support radio communications of more than one wireless protocol may be referred to as multi-mode baseband circuitry.

RF circuitry 906 may enable communication with wireless networks using modulated electromagnetic radiation through a non-solid medium. In various embodiments, RF circuitry 906 may include switches, filters, amplifiers, and so on, to facilitate the communication with the wireless network. RF circuitry 906 may include a receive signal path which may include circuitry to down-convert RF signals received from FEM circuitry 908 and provide baseband signals to baseband circuitry 904. RF circuitry 906 may also include a transmit signal path which may include circuitry to up-convert baseband signals provided by the baseband circuitry 904 and provide RF output signals to FEM circuitry 908 for transmission.

In some embodiments, RF circuitry 906 may include a receive signal path and a transmit signal path. The receive signal path of RF circuitry 906 may include mixer circuitry 906a, amplifier circuitry 906b and filter circuitry 906c. The transmit signal path of RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from FEM circuitry 908 based on the synthesized frequency provided by synthesizer circuitry 906d. Amplifier circuitry 906b may be configured to amplify the down-converted signals and the filter circuitry 906c may be a low-pass filter (LPF) or band-pass filter (BPF) configured to remove unwanted signals from the down-converted signals to generate output baseband signals. Output baseband signals may be provided to baseband circuitry 904 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In some embodiments, mixer circuitry 906a of the transmit signal path may be configured to up-convert input baseband signals based on the synthesized frequency provided by synthesizer circuitry 906d to generate RF output signals for FEM circuitry 908. The baseband signals may be provided by the baseband circuitry 904 and may be filtered by filter circuitry 906c. Filter circuitry 906c may include a low-pass filter (LPF), although the scope of the embodiments is not limited in this respect.

In some embodiments, mixer circuitry 906a of the receive signal path and the mixer circuitry 906a of the transmit signal path may include two or more mixers and may be arranged for quadrature down conversion and/or up conversion respectively. In some embodiments, mixer circuitry 906a of the receive signal path and the mixer circuitry 906a of the transmit signal path may include two or more mixers and may be arranged for image rejection, for example Hartley image rejection. In some embodiments, mixer circuitry 706a of the receive signal path and the mixer circuitry 906a may be arranged for direct down conversion and/or direct up conversion, respectively. In some embodiments, mixer circuitry 906a of the receive signal path and mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, RF circuitry 906 may include analog-to-digital converter (ADC) and digital-to-analog converter (DAC) circuitry, and baseband circuitry 704 may include a digital baseband interface to communicate with RF circuitry 906. In some dual-mode embodiments, separate radio integrated circuit (IC) circuitry may be provided for processing signals for one or more spectra, although the scope of the embodiments is not limited in this respect.

In some embodiments, synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

Synthesizer circuitry 906d may be configured to synthesize an output frequency for use by mixer circuitry 906a of RF circuitry 906 based on a frequency input and a divider control input. In some embodiments, synthesizer circuitry 906d may be a fractional N/N+1 synthesizer.

In some embodiments, frequency input may be provided by a voltage controlled oscillator (VCO), although that is not a requirement. Divider control input may be provided by either baseband circuitry 904 or applications processor 902 depending on the desired output frequency. In some embodiments, a divider control input (e.g., N) may be determined from a look-up table based on a channel indicated by applications processor 902.

Synthesizer circuitry 906d of RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1, for example based on a carry out, to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency, for example twice the carrier frequency, four times the carrier frequency, and so on, and used in conjunction with quadrature generator and divider circuitry to generate multiple signals at the carrier frequency with multiple different phases with respect to each other. In some embodiments, the output frequency may be a local oscillator (LO) frequency (fLO). In some embodiments, RF circuitry 906 may include an in-phase and quadrature (IQ) and/or polar converter.

FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by RF circuitry 906 for transmission by one or more of the one or more antennas 910.

In some embodiments, FEM circuitry 908 may include a transmit/receive (TX/RX) switch to switch between transmit mode and receive mode operation. FEM circuitry 908 may include a receive signal path and a transmit signal path. The receive signal path of FEM circuitry 908 may include a low-noise amplifier (LNA) to amplify received RF signals and to provide the amplified received RF signals as an output, for example to RF circuitry 906. The transmit signal path of FEM circuitry 908 may include a power amplifier (PA) to amplify input RF signals, for example provided by RF circuitry 906, and one or more filters to generate RF signals for subsequent transmission, for example by one or more of antennas 910. In some embodiments, UE device 900 may include additional elements such as, for example, memory and/or storage, display, camera, sensor, and/or input/output (I/O) interface, although the scope of the claimed subject matter is not limited in this respect.

The following examples pertain to further embodiments. Example 1 includes an apparatus of a User Equipment (UE) capable to map Physical Broadcast Channel (PBCH) repetition symbols for Machine-Type Communication (MTC), the apparatus of the UE comprising baseband processing circuitry to: generate one or more PBCH repetition symbols, wherein at least one of the one or more generated PBCH repetition symbols is to comprise a repetition of PBCH symbols within a subframe (SF). Example 2 includes an apparatus as set forth in example 1 or any other example discussed herein, wherein the baseband processing circuitry is to generate one or more virtual Cell-specific Reference Symbols (CRS) to match corresponding legacy PBCH symbols in response to a determination that there are no CRS Resource Elements (REs) present for the one or more PBCH repetition symbols. Example 3 includes an apparatus as set forth in any of examples 1-2 or any other example discussed herein, wherein the one or more virtual CRS are a copy of corresponding CRS symbols for the corresponding legacy PBCH symbols. Example 4 includes an apparatus as set forth in any of examples 1-3 or any other example discussed herein, wherein the baseband processing circuitry is to map the one or more PBCH repetition symbols to maintain a same relative position or symbol ordering in accordance with the legacy PBCH symbols. Example 5 includes an apparatus as set forth in any of examples 1-4 or any other example discussed herein, wherein the baseband processing circuitry is to repeat the one or more PBCH repetition symbols in SF #9 of Long Term Evolution (LTE) radio frame for Frequency Division Duplex (FDD). Example 6 includes an apparatus as set forth in any of examples 1-5 or any other example discussed herein, wherein the baseband processing circuitry is to repeat the one or more PBCH repetition symbols in SF #5 of LTE radio frame for Time Division Duplex (TDD). Example 7 includes an apparatus as set forth in any of examples 1-6 or any other example discussed herein, wherein the baseband processing circuitry is to repeat the one or more PBCH repetition symbols in SF #0 of LTE radio frame for TDD. Example 8 includes an apparatus as set forth in any of examples 1-7 or any other example discussed herein, wherein the one or more virtual CRS to be transmitted in OFDM symbol #3 or symbol #12 of a Downlink (DL) LTE subframe carrying PBCH repetitions are to use CRS sequence values that are replicas of those used to transmit CRS in OFDM symbol #4 or symbol #11, respectively. Example 9 includes an apparatus as set forth in any of examples 1-8 or any other example discussed herein, wherein if for the one or more PBCH repetition symbols there are legacy CRS REs present or PSS or SSS transmissions, then the legacy CRS REs or legacy Primary Synchronization Signal (PSS) or Secondary Synchronization Signal (SSS) transmissions are to puncture the PBCH repetition on the affected REs. Example 10 includes an apparatus as set forth in any of examples 1-9 or any other example discussed herein, wherein the one or more virtual CRS to be transmitted with a same Antenna Port (AP) mapping used for the CRS transmitted in the corresponding legacy PBCH symbols. Example 11 includes an apparatus as set forth in any of examples 1-10 or any other example discussed herein, wherein AP to RE mapping of the one or more virtual CRS is to be performed to balance CRS density corresponding to each AP 0 through 4. Example 12 includes an apparatus as set forth in any of examples 1-11 or any other example discussed herein, wherein the one or more virtual CRS to be transmitted in OFDM symbol #3 of a DL LTE subframe are to be mapped to APs 2 and 3 and independent of CRS sequence and symbols used for the one or more virtual CRS.

Example 13 includes one or more computer-readable media having instructions stored thereon that, if executed by an apparatus of a user equipment (UE), result in: generating one or more PBCH repetition symbols, wherein at least one of the one or more generated PBCH repetition symbols is to comprise a repetition of PBCH symbols within a subframe. Example 14 includes the one or more computer-readable media as set forth in example 13 or any other example discussed herein, wherein the instructions, if executed, result in generating one or more virtual CRS to match corresponding legacy PBCH symbols in response to a determination that there are no CRS REs present for the one or more PBCH repetition symbols. Example 15 includes the one or more computer-readable media as set forth in any of examples 13-14 or any other example discussed herein, wherein the instructions, if executed, result in transmitting the one or more virtual CRS with a same AP mapping used for the CRS transmitted in the corresponding legacy PBCH symbols.

Example 16 includes an apparatus of an enhanced NodeB (eNB) capable to map PBCH repetition symbols for MTC, the apparatus of the eNB comprising baseband processing circuitry to: generate one or more PBCH repetition symbols, wherein at least one of the one or more generated PBCH repetition symbols is to comprise a repetition of PBCH symbols within a subframe (SF). Example 17 includes an apparatus as set forth in example 16 or any other example discussed herein, wherein the baseband processing circuitry is to generate one or more virtual CRS to match corresponding legacy PBCH symbols in response to a determination that there are no CRS REs present for the one or more PBCH repetition symbols. Example 18 includes an apparatus as set forth in any of examples 16-17 or any other example discussed herein, wherein the one or more virtual CRS are a copy of corresponding CRS symbols for the corresponding legacy PBCH symbols. Example 19 includes an apparatus as set forth in any of examples 16-18 or any other example discussed herein, wherein the baseband processing circuitry is to map the one or more PBCH repetition symbols to maintain a same relative position or symbol ordering in accordance with the legacy PBCH symbols. Example 20 includes an apparatus as set forth in any of examples 16-19 or any other example discussed herein, wherein the baseband processing circuitry is to repeat the one or more PBCH repetition symbols in SF #9 of LTE radio frame for FDD. Example 21 includes an apparatus as set forth in any of examples 16-20 or any other example discussed herein, wherein the baseband processing circuitry is to repeat the one or more PBCH repetition symbols in SF #5 of LTE radio frame for TDD. Example 22 includes an apparatus as set forth in any of examples 16-21 or any other example discussed herein, wherein the baseband processing circuitry is to repeat the one or more PBCH repetition symbols in SF #0 of LTE radio frame for TDD. Example 23 includes an apparatus as set forth in any of examples 16-22 or any other example discussed herein, wherein the one or more virtual CRS to be transmitted in OFDM symbol #3 or symbol #12 of a DL LTE subframe carrying PBCH repetitions are to use CRS sequence values that are replicas of those used to transmit CRS in OFDM symbol #4 or symbol #11, respectively. Example 24 includes an apparatus as set forth in any of examples 16-23 or any other example discussed herein, wherein if for the one or more PBCH repetition symbols there are legacy CRS REs present or PSS or SSS transmissions, then the legacy CRS REs or legacy PSS or SSS transmissions are to puncture the PBCH repetition on the affected REs. Example 25 includes an apparatus as set forth in any of examples 16-24 or any other example discussed herein, wherein the one or more virtual CRS to be transmitted with a same Antenna Port (AP) mapping used for the CRS transmitted in the corresponding legacy PBCH symbols. Example 26 includes an apparatus as set forth in any of examples 16-25 or any other example discussed herein, wherein AP to RE mapping of the one or more virtual CRS is to be performed to balance CRS density corresponding to each AP 0 through 4. Example 27 includes an apparatus as set forth in any of examples 16-26 or any other example discussed herein, wherein the one or more virtual CRS to be transmitted in OFDM symbol #3 of a DL LTE subframe are to be mapped to APs 2 and 3 and independent of CRS sequence and symbols used for the one or more virtual CRS.

Example 28 includes one or more computer-readable media having instructions stored thereon that, if executed by an apparatus of an eNB), result in: generating one or more PBCH repetition symbols, wherein at least one of the one or more generated PBCH repetition symbols is to comprise a repetition of PBCH symbols within a subframe. Example 29 includes the one or more computer-readable media as set forth in example 28 or any other example discussed herein, wherein the instructions, if executed, result in generating one or more virtual CRS to match corresponding legacy PBCH symbols in response to a determination that there are no CRS REs present for the one or more PBCH repetition symbols. Example 30 includes the one or more computer-readable media as set forth in any of examples 28-29 or any other example discussed herein, wherein the instructions, if executed, result in transmitting the one or more virtual CRS with a same AP mapping used for the CRS transmitted in the corresponding legacy PBCH symbols.

Example 31 includes a system comprising: memory to store information corresponding to a cellular communication; and an apparatus of a User Equipment (UE) capable to map Physical Broadcast Channel (PBCH) repetition symbols for Machine-Type Communication (MTC), wherein the apparatus is to be coupled to the memory to access the stored information, the apparatus of the UE comprising baseband processing circuitry to:
generate one or more PBCH repetition symbols, wherein at least one of the one or more generated PBCH repetition symbols is to comprise a repetition of PBCH symbols within a subframe (SF). Example 32 includes a system as set forth in example 31 or any other example discussed herein, wherein the baseband processing circuitry is to generate one or more virtual Cell-specific Reference Symbols (CRS) to match corresponding legacy PBCH symbols in response to a determination that there are no CRS Resource Elements (REs) present for the one or more PBCH repetition symbols. Example 33 includes a system as set forth in any one of examples 31-32 or any other example discussed herein, wherein the one or more virtual CRS are a copy of corresponding CRS symbols for the corresponding legacy PBCH symbols. Example 34 includes a system as set forth in any one of examples 31-33 or any other example discussed herein, wherein the baseband processing circuitry is to map the one or more PBCH repetition symbols to maintain a same relative position or symbol ordering in accordance with the legacy PBCH symbols.

Example 35 includes a system comprising: memory to store information corresponding to a cellular communication; and an apparatus of an enhanced NodeB (eNB) capable to map PBCH repetition symbols for MTC, the apparatus of the eNB comprising baseband processing circuitry to: generate one or more PBCH repetition symbols, wherein at least one of the one or more generated PBCH repetition symbols is to comprise a repetition of PBCH symbols within a subframe (SF). Example 36 includes a system as set forth in example 35 or any other example discussed herein, wherein the baseband processing circuitry is to generate one or more virtual CRS to match corresponding legacy PBCH symbols in response to a determination that there are no CRS REs present for the one or more PBCH repetition symbols. Example 37 includes a system as set forth in any one of examples 35-36 or any other example discussed herein, wherein the one or more virtual CRS are a copy of corresponding CRS symbols for the corresponding legacy PBCH symbols. Example 38 includes a system as set forth in any one of examples 35-37 or any other example discussed herein, wherein the baseband processing circuitry is to map the one or more PBCH repetition symbols to maintain a same relative position or symbol ordering in accordance with the legacy PBCH symbols.

Example 39 includes an apparatus comprising means to perform a method as set forth in any embodiment or example discussed herein. Example 40 comprises machine-readable storage including machine-readable instructions, when executed, to implement a method or realize an apparatus as set forth in any embodiment or example discussed herein.

In various embodiments, the operations discussed herein, e.g., with reference to Figs. 1-9, may be implemented as hardware (e.g., logic circuitry), software, firmware, or combinations thereof, which may be provided as a computer program product, e.g., including a tangible (e.g., non-transitory) machine-readable or computer-readable medium having stored thereon instructions (or software procedures) used to program a computer to perform a process discussed herein. The machine-readable medium may include a storage device such as those discussed with respect to Figs. 1-9.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Further, in the description and/or claims, the terms "coupled" and/or connected, along with their derivatives, may be used. In particular embodiments, connected may be used to indicate that two or more elements are in direct physical and/or electrical contact with each other. Coupled may mean that two or more elements are in direct physical and/or electrical contact. However, coupled may also mean that two or more elements may not be in direct contact with each other, but yet may still cooperate and/or interact with each other. For example, "coupled" may mean that two or more elements do not contact each other but are indirectly joined together via another element or intermediate elements.

## Claims

1. An apparatus of a User Equipment, UE, (111, 900) capable to map Physical Broadcast Channel, PBCH, repetition symbols for Machine-Type Communication, MTC, the apparatus of the UE (111, 900) comprising baseband processing circuitry (904) to:
generate one or more PBCH repetition symbols, wherein at least one of the one or more generated PBCH repetition symbols is to comprise a repetition of PBCH symbols within a subframe, SF, and
generate one or more virtual Cell-specific Reference Symbols, CRS, in response to a determination that there are no CRS Resource Elements, REs, present for the one or more PBCH repetition symbols,
wherein the virtual CRS comprise CRS REs at the same positions as in corresponding legacy PBCH symbols, and wherein the one or more virtual CRS are a copy of corresponding CRS symbols for the corresponding legacy PBCH symbols.

2. An apparatus as claimed in claim 1, wherein the baseband processing circuitry is to map the one or more PBCH repetition symbols to maintain a same relative position or symbol ordering in accordance with the legacy PBCH symbols, or wherein the baseband processing circuitry is to repeat the one or more PBCH repetition symbols in SF #9 of Long Term Evolution, LTE, radio frame for Frequency Division Duplex, FDD, or wherein the baseband processing circuitry is to repeat the one or more PBCH repetition symbols in SF #5 of LTE radio frame for Time Division Duplex, TDD.

3. An apparatus as claimed in any of claims 1-2, wherein the baseband processing circuitry (904) is to repeat the one or more PBCH repetition symbols in SF #0 of LTE radio frame for TDD, or wherein the one or more virtual CRS to be transmitted in OFDM symbol #3 or symbol #12 of a Downlink, DL, LTE subframe carrying PBCH repetitions are to use CRS sequence values that are replicas of those used to transmit CRS in OFDM symbol #4 or symbol #11, respectively.

4. An apparatus as claimed in any of claims 1-3, wherein if for the one or more PBCH repetition symbols there are legacy CRS REs present or PSS or SSS transmissions, then the legacy CRS REs or legacy Primary Synchronization Signal, PSS, or Secondary Synchronization Signal, SSS, transmissions are to puncture the PBCH repetition an the affected REs, or wherein the one or more virtual CRS are to be transmitted with a same Antenna Port, AP, mapping used for the CRS transmitted in the corresponding legacy PBCH symbols, or wherein AP to RE mapping of the one or more virtual CRS is to be performed to balance CRS density corresponding to each AP 0 through 4, or wherein the one or more virtual CRS to be transmitted in OFDM symbol #3 of a DL LTE subframe are to be mapped to APs 2 and 3 and independent of CRS sequence and symbols used for the one or more virtual CRS.

5. An apparatus of an enhanced NodeB, eNB, (110, 900) capable to map PBCH repetition symbols for MTC, the apparatus of the eNB (110, 900) comprising baseband processing circuitry (904) to:
generate one or more PBCH repetition symbols, wherein at least one of the one or more generated PBCH repetition symbols is to comprise a repetition of PBCH symbols within a subframe, SF, and
generate one or more virtual Cell-specific Reference Symbols, CRS, in response to a determination that there are no CRS Resource Elements, REs, present for the one or more PBCH repetition symbols,
wherein the virtual CRS comprise CRS REs at the same positions as in corresponding legacy PBCH symbols, and wherein the one or more virtual CRS are a copy of corresponding CRS symbols for the corresponding legacy PBCH symbols.

6. An apparatus as claimed in claim 5, wherein the baseband processing circuitry (904) is to map the one or more PBCH repetition symbols to maintain a same relative position or symbol ordering in accordance with the legacy PBCH symbols.

7. An apparatus as claimed in any of claims 5-6, wherein the baseband processing circuitry (904) is to repeat the one or more PBCH repetition symbols in SF #9 of LTE radio frame for FDD, or wherein the baseband processing circuitry is to repeat the one or more PBCH repetition symbols in SF #5 of LTE radio frame for TDD, or wherein the baseband processing circuitry is to repeat the one or more PBCH repetition symbols in SF #0 of LTE radio frame for TDD.

8. An apparatus as claimed in any of claims 5-7, wherein the one or more virtual CRS to be transmitted in OFDM symbol #3 or symbol #12 of a DL LTE subframe carrying PBCH repetitions are to use CRS sequence values that are replicas of those used to transmit CRS in OFDM symbol #4 or symbol #11, respectively.

9. An apparatus as claimed in any of claims 5-8, wherein if for the one or more PBCH repetition symbols there are legacy CRS REs present or PSS or SSS transmissions, then the legacy CRS REs or legacy PSS or SSS transmissions are to puncture the PBCH repetition an the affected REs.

10. An apparatus as claimed in any of claims 5-9, wherein the one or more virtual CRS are to be transmitted with a same Antenna Port, AP, mapping used for the CRS transmitted in the corresponding legacy PBCH symbols, or wherein AP to RE mapping of the one or more virtual CRS is to be performed to balance CRS density corresponding to each AP 0 through 4, or wherein the one or more virtual CRS to be transmitted in OFDM symbol #3 of a DL LTE subframe are to be mapped to APs 2 and 3 and independent of CRS sequence and symbols used for the one or more virtual CRS.

## Patentansprüche

1. Vorrichtung eines Benutzergeräts, UE, (111, 900), das fähig ist zum Abbilden von Physical Broadcast Channel, PBCH, -Wiederholungssymbolen für Machine-Type Communication, MTC, wobei die Vorrichtung des UE (111, 900) Basisbandverarbeitungsschaltung (904) umfasst zum:
Erzeugen eines oder mehrerer PBCH-Wiederholungssymbole, wobei mindestens eines des einen oder der mehreren erzeugten PBCH-Wiederholungssymbole eine Wiederholung von PBCH-Symbolen innerhalb eines Subrahmens, SF, umfassen soll, und
Erzeugen eines oder mehrerer virtueller Cell-Specific Reference Symbols, CRS, als Reaktion auf eine Bestimmung, dass keine CRS Resource Elements, REs, für das eine oder die mehreren PBCH-Wiederholungssymbole vorhanden sind,
wobei die virtuellen CRS CRS-REs an denselben Positionen wie in entsprechenden Legacy-PBCH-Symbolen umfassen, und wobei der eine oder die mehreren virtuellen CRS eine Kopie entsprechender CRS-Symbole für die entsprechenden Legacy-PBCH-Symbole sind.

2. Vorrichtung nach Anspruch 1, wobei die Basisbandverarbeitungsschaltung das eine oder die mehreren PBCH-Wiederholungssymbole abbilden soll, um eine gleiche relative Position oder Symbolordnung gemäß den Legacy-PBCH-Symbolen aufrechtzuerhalten, oder wobei die Basisbandverarbeitungsschaltung das eine oder die mehreren PBCH-Wiederholungssymbole in SF #9 von Long Term Evolution, LTE,-Funkrahmen für Frequency Division Duplex, FDD, wiederholen soll, oder wobei die Basisbandverarbeitungsschaltung das eine oder die mehreren PBCH-Wiederholungssymbole in SF #5 von LTE-Funkrahmen für Time Division Duplex, TDD, wiederholen soll.

3. Vorrichtung nach einem der Ansprüche 1 bis 2, wobei die Basisbandverarbeitungsschaltung (904) das eine oder die mehreren PBCH-Wiederholungssymbole in SF #0 von LTE-Funkrahmen für TDD wiederholen soll, oder wobei der eine oder die mehreren virtuellen CRS, die in OFDM-Symbol #3 oder Symbol #12 eines Downlink, DL,-LTE-Subrahmens, der PBCH-Wiederholungen trägt, übertragen werden sollen, CRS-Sequenzwerte verwenden sollen, die Repliken derjenigen sind, die zum Übertragen von CRS in OFDM-Symbol #4 oder Symbol #11 verwendet werden.

4. Vorrichtung nach einem der Ansprüche 1 bis 3, wobei, falls für das eine oder die mehreren PBCH-Wiederholungssymbole Legacy-CRS-REs vorhanden sind, oder PSS- oder SSS-Übertragungen, dann sollen die Legacy-CRS-REs oder Legacy-Primary-Synchronization-Signal-, PSS-, oder Secondary-Synchronization-Signal-, SSS-, Übertragungen die PBCH-Wiederholung auf den betroffenen REs punktieren, oder wobei der eine oder die mehreren virtuellen CRS mit einer gleichen Antennenport-, AP-, Abbildung übertragen werden sollen, die für die CRS verwendet wird, die in den entsprechenden Legacy-PBCH-Symbolen übertragen werden, oder wobei eine AP-zu-RE-Abbildung des einen oder der mehreren virtuellen CRS durchgeführt werden soll, um CRS-Dichte entsprechend jedem AP 0 bis 4 auszugleichen, oder wobei der eine oder die mehreren virtuellen CRS, die in OFDM-Symbol #3 eines DL-LTE-Subrahmens übertragen werden sollen, auf APs 2 und 3 abgebildet werden sollen und unabhängig von CRS-Sequenz und Symbolen sind, die für den einen oder die mehreren virtuellen CRS verwendet werden.

5. Vorrichtung eines Enhanced NodeB, eNB, (110, 900), der fähig ist zum Abbilden von PBCH-Wiederholungssymbolen für MTC, wobei die Vorrichtung des eNB (110, 900) Basisbandverarbeitungsschaltung (904) umfasst zum:
Erzeugen eines oder mehrerer PBCH-Wiederholungssymbole, wobei mindestens eines des einen oder der mehreren erzeugten PBCH-Wiederholungssymbole eine Wiederholung von PBCH-Symbolen innerhalb eines Subrahmens, SF, umfassen soll, und
Erzeugen eines oder mehrerer virtueller Cell-Specific Reference Symbols, CRS, als Reaktion auf eine Bestimmung, dass keine CRS Resource Elements, REs, für das eine oder die mehreren PBCH-Wiederholungssymbole vorhanden sind,
wobei die virtuellen CRS CRS-REs an den gleichen Positionen wie in entsprechenden Legacy-PBCH-Symbolen umfassen, und wobei der eine oder die mehreren virtuellen CRS eine Kopie entsprechender CRS-Symbole für die entsprechenden Legacy-PBCH-Symbole sind.

6. Vorrichtung nach Anspruch 5, wobei die Basisbandverarbeitungsschaltung (904) das eine oder die mehreren PBCH-Wiederholungssymbole abbilden soll, um eine gleiche relative Position oder Symbolordnung gemäß den Legacy-PBCH-Symbolen aufrechtzuerhalten.

7. Vorrichtung nach einem der Ansprüche 5 bis 6, wobei die Basisbandverarbeitungsschaltung (904) das eine oder die mehreren PBCH-Wiederholungssymbole in SF #9 von LTE-Funkrahmen für FDD wiederholen soll, oder wobei die Basisbandverarbeitungsschaltung das eine oder die mehreren PBCH-Wiederholungssymbole in SF #5 von LTE-Funkrahmen für TDD wiederholen soll, oder wobei die Basisbandverarbeitungsschaltung das eine oder die mehreren PBCH-Wiederholungssymbole in SF #0 von LTE-Funkrahmen für TDD wiederholen soll.

8. Vorrichtung nach einem der Ansprüche 5 bis 7, wobei das eine oder die mehreren virtuellen CRS, die in OFDM-Symbol #3 oder Symbol #12 eines DL-LTE-Subrahmens, der PBCH-Wiederholungen trägt, übertragen werden sollen, CRS-Sequenzwerte verwenden sollen, die Repliken derjenigen sind, die zum Übertragen von CRS in OFDM-Symbol #4 oder Symbol #11 verwendet werden.

9. Vorrichtung nach einem der Ansprüche 5 bis 8, wobei, falls für das eine oder die mehreren PBCH-Wiederholungssymbole Legacy-CRS-REs vorhanden sind, oder PSS- oder SSS-Übertragungen, dann sollen die Legacy-CRS-REs oder Legacy-PSS- oder SSS-Übertragungen die PBCH-Wiederholung auf den betroffenen REs punktieren.

10. Vorrichtung nach einem der Ansprüche 5 bis 9, wobei das eine oder die mehreren virtuellen CRS mit einer gleichen Antennenport-, AP-, Abbildung übertragen werden sollen, die für die CRS verwendet wird, die in den entsprechenden Legacy-PBCH-Symbolen übertragen werden, oder wobei eine AP-zu-RE-Abbildung des einen oder der mehreren virtuellen CRS durchgeführt werden soll, um CRS-Dichte entsprechend jedem AP 0 bis 4 auszugleichen, oder wobei das eine oder die mehreren virtuellen CRS, die in OFDM-Symbol #3 eines DL-LTE-Subrahmens übertragen werden sollen, auf APs 2 und 3 abgebildet werden soll und unabhängig von CRS-Sequenz und Symbolen sind, die für das eine oder die mehreren virtuellen CRS verwendet werden.

## Revendications

1. Un appareil d'un équipement utilisateur, UE, (111, 900) capable de mapper des symboles de répétition de canal physique de diffusion, PBCH, pour une communication de type machine, MTC, l'appareil de l'UE (111, 900) comprenant un ensemble de circuits de traitement de la bande de base (904) pour :
générer un ou plusieurs symboles de répétition de PBCH, dans lequel au moins un des un ou plusieurs symboles de répétition de PBCH générés doit comprendre une répétition de symboles de PBCH dans une sous-trame, SF, et
générer un ou plusieurs symboles de référence spécifiques à une cellule, CRS, virtuels en réponse à une détermination qu'il n'y a pas d'élément de ressources, RE, de CRS présent pour les un ou plusieurs symboles de répétition de PBCH,
dans lequel les CRS virtuels comprennent des RE de CRS aux mêmes positions que dans des symboles de PBCH existants correspondants, et dans lequel les un ou plusieurs CRS virtuels sont une copie de symboles de CRS correspondants pour les symboles de PBCH existants correspondants.

2. Un appareil selon la revendication 1, dans lequel l'ensemble de circuits de traitement de la bande de base doit mapper les un ou plusieurs symboles de répétition de PBCH pour maintenir une même position relative ou un classement de symboles conformément aux symboles de PBCH existants, ou dans lequel l'ensemble de circuits de traitement de la bande de base doit répéter les un ou plusieurs symboles de répétition de PBCH dans la SF #9 d'une trame radio Long Term Evolution, LTE, pour un duplexage par répartition en fréquences, FDD, ou dans lequel l'ensemble de circuits de traitement de la bande de base doit répéter les un ou plusieurs symboles de répétition de PBCH dans la SF #5 d'une trame radio LTE pour un duplexage par répartition dans le temps, TDD.

3. Un appareil selon l'une quelconque des revendications 1 ou 2, dans lequel l'ensemble de circuits de traitement de la bande de base (904) doit répéter les un ou plusieurs symboles de répétition de PBCH dans la SF #0 d'une trame radio LTE pour un TDD, ou dans lequel les un ou plusieurs CRS virtuels devant être transmis dans un symbole OFDM #3 ou un symbole #12 d'une sous-trame LTE de liaison descendante, DL, transportant des répétitions de PBCH doivent utiliser des valeurs de séquence de CRS qui sont des répliques de celles utilisées pour transmettre des CRS dans un symbole OFDM #4 ou un symbole #11, respectivement.

4. Un appareil selon l'une quelconque des revendications 1 à 3, dans lequel si pour les un ou plusieurs symboles de répétition de PBCH il y a des RE de CRS existants présents ou des transmissions de PSS ou de SSS, alors les RE de CRS existants ou les transmissions de signal de synchronisation primaire, PSS, ou de signal de synchronisation secondaire, SSS, existantes doivent perforer la répétition de PBCH sur les RE concernés, ou dans lequel les un ou plusieurs CRS virtuels doivent être transmis avec un même mappage de port d'antenne, AP, utilisé pour le CRS transmis dans les symboles de PBCH existants correspondants, ou dans lequel un mappage AP sur RE des un ou plusieurs CRS virtuels doit être effectué pour équilibrer une densité de CRS correspondant à chaque AP 0 à 4, ou dans lequel les un ou plusieurs CRS virtuels devant être transmis dans un symbole OFDM #3 d'une sous-trame LTE de DL doivent être mappés sur des AP 2 et 3 et indépendamment d'une séquence de CRS et de symboles utilisés pour les un ou plusieurs CRS virtuels.

5. Un appareil d'un nœud B évolué, eNB, (110, 900) capable de mapper des symboles de répétition de PBCH pour une MTC, l'appareil de l'eNB (110, 900) comprenant un ensemble de circuits de traitement de la bande de base (904) pour :
générer un ou plusieurs symboles de répétition de PBCH, dans lequel au moins un des un ou plusieurs symboles de répétition de PBCH générés doit comprendre une répétition de symboles de PBCH dans une sous-trame, SF, et
générer un ou plusieurs symboles de référence spécifiques à une cellule, CRS, virtuels en réponse à une détermination qu'il n'y a pas d'élément de ressources, RE, de CRS présent pour les un ou plusieurs symboles de répétition de PBCH,
dans lequel les CRS virtuels comprennent des RE de CRS aux mêmes positions que dans des symboles de PBCH existants correspondants, et dans lequel les un ou plusieurs CRS virtuels sont une copie de symboles de CRS correspondants pour les symboles de PBCH existants correspondants.

6. Un appareil selon la revendication 5, dans lequel l'ensemble de circuits de traitement de la bande de base (904) doit mapper les un ou plusieurs symboles de répétition de PBCH pour maintenir une même position relative ou un classement de symboles conformément aux symboles de PBCH existants.

7. Un appareil selon l'une quelconque des revendications 5 ou 6, dans lequel l'ensemble de circuits de traitement de la bande de base (904) doit répéter les un ou plusieurs symboles de répétition de PBCH dans la SF #9 d'une trame radio LTE pour un FDD, ou dans lequel l'ensemble de circuits de traitement dans la bande de base doit répéter les un ou plusieurs symboles de répétition de PBCH dans la SF #5 d'une trame radio LTE pour un TDD, ou dans lequel l'ensemble de circuits de traitement dans la bande de base doit répéter les un ou plusieurs symboles de répétition de PBCH dans la SF #0 d'une trame radio LTE pour un TDD.

8. Un appareil selon l'une quelconque des revendications 5 à 7, dans lequel les un ou plusieurs CRS virtuels devant être transmis dans un symbole OFDM #3 ou un symbole #12 d'une sous-trame LTE de DL transportant des répétitions de PBCH doivent utiliser des valeurs de séquence de CRS qui sont des répliques de celles utilisées pour transmettre des CRS dans un symbole OFDM #4 ou un symbole #11, respectivement.

9. Un appareil selon l'une quelconque des revendications 5 à 8, dans lequel si pour les un ou plusieurs symboles de répétition de PBCH il y a des RE de CRS existants présents ou des transmissions de PSS ou de SSS, alors les RE de CRS existants ou les transmissions de PSS ou de SSS existantes doivent perforer la répétition de PBCH sur les RE concernés.

10. Un appareil selon l'une quelconque des revendications 5 à 9, dans lequel les un ou plusieurs CRS virtuels doivent être transmis avec un même mappage de port d'antenne, AP, utilisé pour le CRS transmis dans les symboles de PBCH existants correspondants, ou dans lequel un mappage AP sur RE des un ou plusieurs CRS virtuels doit être effectué pour équilibrer une densité de CRS correspondant à chaque AP 0 à 4, ou dans lequel les un ou plusieurs CRS virtuels devant être transmis dans un symbole OFDM #3 d'une sous-trame LTE de DL doivent être mappés sur des AP 2 et 3 et indépendamment d'une séquence de CRS et de symboles utilisés pour les un ou plusieurs CRS virtuels.
